Europäisches Patentamt

**European Patent Office**

**Office européen des brevets**

(11) Numéro de publication: **0 097 603**

**A2**

## (12) DEMANDE DE BREVET EUROPEEN

(21) Numéro de dépôt: **83440032.7**

(22) Date de dépôt: **06.06.83**

(51) Int. Cl.³: **B 32 B 31/04**

(30) Priorité: **08.06.82 FR 8210278**

(43) Date de publication de la demande:
**04.01.84 Bulletin 84/1**

(84) Etats contractants désignés:
**AT BE CH DE GB IT LI LU NL SE**

(71) Demandeur: **EMILE PFALZGRAF "EPB", S.A.**
**7, rue de Neuwiller**
**F-67330 Bouxwiller(FR)**

(72) Inventeur: **Pfalzgraf, Emile**
**7, rue de Neuwiller**
**F-67330 Bouxwiller(FR)**

(74) Mandataire: **Nuss, Pierre**
**10, rue Jacques Kablé**
**F-67000 Strasbourg(FR)**

(54) **Dispositif porte-outils à réglage axial.**

(57) La présente invention concerne un dispositif porte-outils à réglage axial pour outils à queue cylindrique, ou conique, ainsi que pour attachements modulaires.

Dispositif caractérisé en ce qu'il est essentiellement constitué par un corps (1) présentant une extrémité conique de montage sur une machine, et à l'extrémité opposée, un alésage (2) muni à sa partie antérieure de deux plats de guidage (3), et une surface cylindrique (4) de centrage d'une bague filetée (5), par une douille cylindrique (6) s'emmanchant à glissement dans l'alésage (2) du corps (1), guidée en translation par des plats (10) coopérant avec les plats (3) de l'alésage (2) du corps (1), et munie à son extrémité libre d'un filetage (7) coopérant avec un filetage intérieur de la bague (5), par une vis de blocage (8) de la douille (6) dans le corps (1) après réglage en longueur au moyen de la bague (5), et par une vis (9) de serrage final de la douille (6).

Fig.1

EP 0 097 603 A2

# TITRE MODIFIÉ
voir page de garde

EMILE PFALZGRAF "EPB", S.A.
7, rue de Neuwiller, 67330 BOUXWILLER (France)

Dispositif porte-outils à réglage axial
pour outils à queue cylindrique, ou conique,
ainsi que pour attachements modulaires

La présente invention concerne le domaine des dispositifs porte-outils pour outils à queue cylindrique, ou conique, ainsi que pour attachements modulaires, et a pour objet un dispositif à réglage axial destiné à cet effet.

Actuellement, le réglage en longueur des outils est généralement effectué sur les machines mêmes pendant leur montage dans les mandrins. Cependant, un tel mode de montage nécessite des temps de réglage relativement longs occasionnant des pertes importantes par immobilisation des machines.

La présente invention a pour but de pallier ces inconvénients.

Elle a, en effet, pour objet un dispositif porte-outils à réglage axial pour outils à queue cylindrique, ou conique, caractérisé en ce qu'il est essentiellement constitué par un corps présentant une extrémité conique de montage sur une machine, et à l'extrémité opposée, un alésage muni à sa partie antérieure de deux plats de guidage, et une surface cylindrique de centrage d'une bague filetée, par une douille cylindrique s'emmanchant à glissement dans l'alésage du corps, guidée en translation par des plats coopérant avec les plats de l'alésage du corps, et munie à son extrémité libre d'un filetage coopérant avec un filetage intérieur de la bague, par une vis de blocage de la douille dans le corps après réglage en longueur au moyen de la bague, et par une vis de serrage final de la douille.

L'invention sera mieux comprise grâce à la description ci-après, qui se rapporte à un mode de réalisation préféré, donné à titre d'exemple non limitatif, et expliqué avec référence aux dessins schématiques annexés, dans lesquels :

la figure 1 est une vue en coupe d'un dispositif conforme à l'invention, et

la figure 2 est une demi-vue en coupe, à plus petite échelle, d'une variante de réalisation de l'invention.

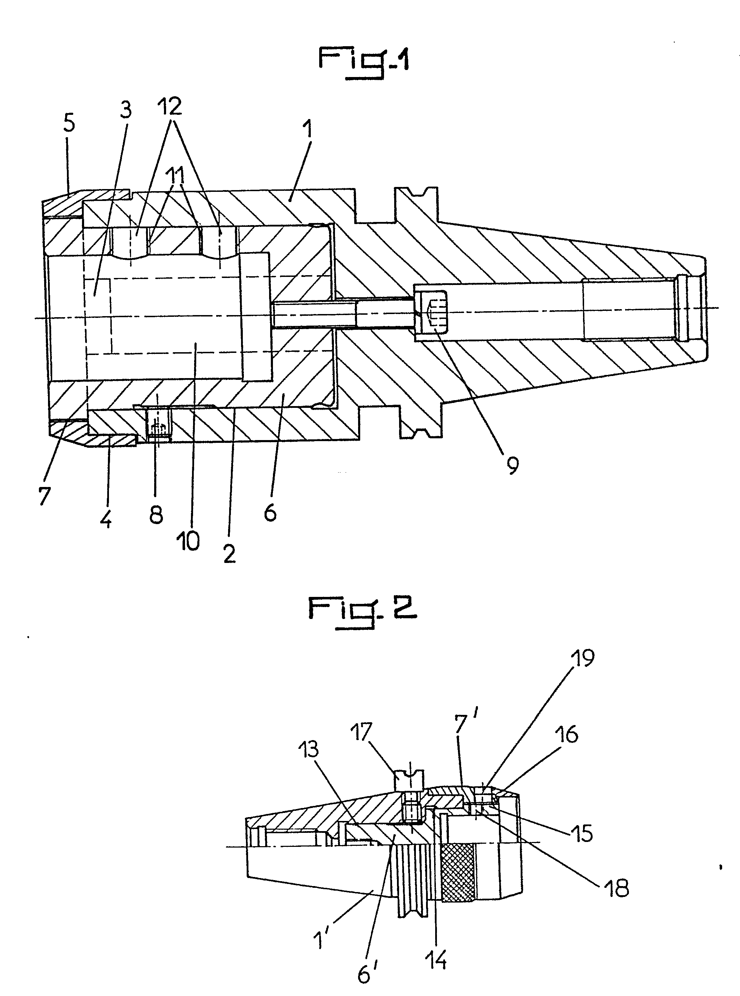

Conformément à l'invention, et comme le montre plus particulièrement, à titre d'exemple, la figure 1 des dessins annexés, le dispositif porte-outils à réglage axial pour outils à queue cylindrique ou conique, est essentiellement constitué par un corps 1 présentant une extrémité conique de montage sur une machine, et pourvu, à l'extrémité opposée, d'un alésage 2 dont la partie antérieure comporte deux plats de guidage 3, et d'une surface cylindrique 4 de centrage pour une bague filetée 5. Dans l'alésage 2 est montée une douille cylindrique 6, qui est munie à son extrémité libre d'un filetage 7 coopérant avec un filetage intérieur de la bague filetée 5. Après son réglage en longueur au moyen de la bague 5, la douille 6, qui est guidée en translation par des plats 10 coopérant avec les plats 3, peut être bloquée dans le corps 1, au moyen d'une vis 8, et son maintien en position est réalisé au moyen d'une vis de serrage final 9.

La surface 4 assure le guidage de la bague 5, qui, par sa rotation assure un déplacement longitudinal de la douille 6 dont la rotation est empêchée par les plats 10,

- R E V E N D I C A T I O N S -

1. Dispositif porte-outils à réglage axial pour outils à queue cylindrique, ou conique, caractérisé en ce qu'il est essentiellement constitué par un corps (1) présentant une extrémité conique de montage sur une machine, et à l'extrémité opposée, un alésage (2) muni à sa partie antérieure de deux plats de guidage (3), et une surface cylindrique (4) de centrage d'une bague filetée (5), par une douille cylindrique (6) s'emmanchant à glissement dans l'alésage (2) du corps (1), guidée en translation par des plats (10) coopérant avec les plats (3) de l'alésage (2) du corps (1), et munie à son extrémité libre d'un filetage (7) coopérant avec un filetage intérieur de la bague (5), par une vis de blocage (8) de la douille (6) dans le corps (1) après réglage en longueur au moyen de la bague (5), et par une vis (9) de serrage final de la douille (6).

2. Dispositif, suivant la revendication 1, caractérisé en ce que dans la douille (6) sont prévus, en outre, des trous taraudés (11) permettant la fixation de l'outil au moyen de vis (12).

3. Dispositif, suivant la revendication 1, caractérisé en ce que les plats de guidage (10) de la douille (6) s'étendent avantageusement derrière la partie filetée (7), qui présente, de préférence un diamètre supérieur à celui du reste de la douille (6), et dont l'épaulement forme une butée de fin de course de rentrée de ladite douille (6).

4. Dispositif, suivant la revendication 1, caractérisé en ce que, pour le montage réglable d'attachements modulaires, le corps (1') est pourvu de deux alésages coaxiaux étagés (13, 14) dont celui (13), de plus petit diamètre est le plus intérieur et est muni d'une clavette assurant un entraînement en rotation, de la douille (6'), qui est étagée de manière correspondante aux alésages (13, 14), et qui est pourvue à sa partie antérieure d'un épaulement fileté (15) coopérant avec un filetage intérieur d'une bague (7') guidée en rotation sur le corps (1'), et sur la partie antérieure de ladite bague (7') est guidée en rotation une autre bague (16).

5. Dispositif, suivant la revendication 4, caractérisé en ce que la douille (6') peut être bloquée et maintenue en position après réglage axial au moyen d'une vis (17) agissant sur la partie de plus petit diamètre de la douille (6'), et sa partie de plus grand diamètre est munie d'un trou taraudé (18) pour une vis de fixation des adaptateurs modulaires, un perçage (19) prévu dans la bague (16) guidée sur la bague (7') permettant l'insertion et la manoeuvre de ladite vis, la rotation de la bague (16) permettant un recouvrement du trou taraudé (18), et ainsi sa protection contre l'entrée de saletés, ou analogues, et la partie antérieure de la bague protégeant la collerette des adaptateurs contre une telle pénétration.

6. Dispositif, suivant l'une quelconque des revendications 4 et 5, caractérisé en ce que le corps (1') est avantageusement muni d'un ergot coopérant avec une rainure longitudinale de la douille (6') et limitant la course de sortie de cette dernière, afin d'éviter un démontage accidentel de l'ensemble.

qui coopèrent avec les plats 3 de l'alésage 2 du corps 1, de sorte que l'outil, porté par la douille 6, entre ou sort plus ou moins dans le ou du corps 1, et que sa longueur par rapport à une face de ce dernier, est réglée.

Dans la douille 6 sont prévus, en outre, des trous taraudés 11 permettant la fixation de l'outil au moyen de vis 12.

La vis de blocage 8 est uniquement destinée à assurer un maintien de la douille 6 contre un déréglage avant le serrage final au moyen de la vis 9.

Conformément à une caractéristique de l'invention, les plats de guidage 10 de la douille 6 s'étendent avantageusement derrière la partie filetée 7, qui présente, de préférence un diamètre supérieur à celui du reste de la douille 6, et dont l'épaulement forme une butée de fin de course de rentrée de ladite douille 6.

La figure 2 représente une variante de réalisation de l'invention permettant le montage réglable d'attachements modulaires, en particulier tels que ceux décrits dans la demande française de brevet 81 14805. A cet effet, le corps 1' est pourvu de deux alésages coaxiaux étagés 13, 14 dont celui, 13, de plus petit diamètre est le plus intérieur et est muni d'une clavette (non représentée) assurant un entraînement en rotation de la douille 6', qui est étagée de manière correspondante aux alésages 13, 14, et qui est pourvue à sa partie antérieure, d'un épaulement fileté 15 coopérant avec un filetage intérieur d'une bague 7' guidée en rotation sur le corps 1', et sur la partie antérieure de ladite bague 7' est guidée en rotation une autre bague 16.

La douille 6' peut être bloquée et maintenue en position après réglage axial au moyen d'une vis 17 agissant sur la partie de plus petit diamètre de la douille 6', et sa partie de plus grand diamètre est munie d'un trou taraudé 18 pour une vis de fixation des adaptateurs modulaires, un perçage 19 prévu dans la bague 16 guidée sur la bague 7' permettant l'insertion et la manoeuvre de ladite vis, la rotation de la bague 16 permettant un recouvrement du trou taraudé 18, et ainsi sa protection contre l'entrée de saletés, ou analogues, et la partie antérieure de la bague protégeant la collerette des adaptateurs contre une telle pénétration.

Selon une autre caractéristique de l'invention, le corps 1' est avantageusement muni d'un ergot (non représenté) coopérant avec une rainure longitudinale (non représentée) de la douille 6' et limitant la course de sortie de cette dernière, afin d'éviter un démontage accidentel de l'ensemble.

Afin de réaliser un meilleur serrage de la douille réglée, il peut être prévu une vis 9' de serrage final pénétrant dans le corps 1' du côté de son extrémité conique et agissant sur l'extrémité postérieure de la douille 6'.

Grâce au dispositif conforme à l'invention, il est possible de régler en longueur des outils avant leur montage sur une machine, de manière particulièrement précise et rapide, que leur attachement soit à queue conique ou cylindrique, ou soit du type modulaire.

Bien entendu, l'invention n'est pas limitée aux modes de réalisation décrits et représentés aux dessins annexés. Des modifications restent possibles, notamment du point de vue de la constitution des divers éléments, ou par substitution d'équivalents techniques, sans sortir pour autant du domaine de protection de l'invention.

Fig.1

Fig.2